# EUROPEAN PATENT SPECIFICATION

(11) **EP 1 775 184 B1**
(45) Date of publication and mention of the grant of the patent: **01.08.2012**
(21) Application number: 06017830.8
(22) Date of filing: 25.08.2006
(51) Int. Cl.: G07C 9/00, B60R 25/00

(54) **Vehicle door unlock control system**
Fahrzeugtür- Ver- und Entriegelungssystem
Système de verrouillage et déverrouillage des portes d'un véhicule

(30) Priority: 17.10.2005 JP 2005301983
(43) Date of publication of application: 18.04.2007
(73) Proprietor: TOYOTA JIDOSHA KABUSHIKI KAISHA, Toyota-shi, Aichi-ken, 471-8571 (JP)
(72) Inventor: Kamiya, Masachika, Toyota-shi, Aichi-ken 471-8571 (JP)
(74) Representative: Winter, Brandl, Fürniss, Hübner, Röss, Kaiser, Polte - Partnerschaft

(56) References cited:
- EP-A2- 1 108 629
- US-A1- 2002 173 289
- US-B1- 6 670 883

## Description

### BACKGROUND OF THE INVENTION

### 1. Field of the Invention

The present invention relates to a vehicle door unlock control system for unlocking doors of a vehicle in a state in which the vehicle is parked and the doors are locked.

### 2. Description of the Related Art

For example, in a vehicle employing a system such as a so-called smart entry system which requires an operation electronic current as described below, in order to reduce the required operation electric current during parking, an intermittent operation period (described later) may be gradually extended in four steps, so that the battery power consumption in the vehicle can be reduced. For example, the intermittent operation period may be extended in the four steps, i.e., 9 days, 14 days, and then, 30 days, so that the battery can be prevented from being dead even when the vehicle is parked for a long period.

Further, Japanese Laid-open Patent Application No. 2-209583 discloses a vehicle door lock control apparatus by which, in a vehicle employing a keyless entry system and locking/unlocking of the doors is allowed also by means of ordinary key operation, an event of the door being locked/unlocked by means of the key operation is detected, the operation power supply to the keyless entry system is cut off, and thus, operation of the keyless entry system is stopped.

In this vehicle door lock control apparatus, it is possible to prevent the battery from being dead, or to prevent the vehicle from being stolen even when a portable transmitter is lost, in a case where the vehicle is not used for a long period.

However, the above-described related arts may have difficulties, as follows:
As means for reducing the power consumption of the smart entry system when the vehicle is parked, means for stopping the operation thereof by means of an off switch or such, may be used. In this case, the door is locked/unlocked by means of a wireless remote control system or such. That is, a portable unit is used to transmit a wireless signal, and thereby, the door is locked/unlooked. However, means for further reducing the power consumption is not available.

Further, for when, once the operation of the smart entry system is stopped and then, the smart entry system is to be operated again, the above-mentioned off switch should be operated so as to cancel the operation stopped state of the smart entry system. Accordingly, it is not possible to stop the operation of the smart entry system automatically for a certain time period.

Therefore, a vehicle door unlock control system could be provided by which, according to means, by which a door has been locked, means to unlock the door can be automatically changed.

Such a vehicle door unlock control system is known from EP 1 108 629 A2 and has first lock/unlock control means for locking/unlocking a door based on communication with a portable unit; second lock/unlock control means for locking/unlocking the door according to operation of a mechanical key or a door lock control switch; and lock/unlock means setting means for setting means, by which the door can be unlocked, according to the means, by which the door has been locked.

By configuring so, in the vehicle door unlock control system in which, the door can be locked in any one of various methods, means to unlock the door can be set according to means, by which the door has been locked.

### SUMMERY OF THE INVENTION

It is an object of the present invention to improve a vehicle door unlock control system according to EP 1 108 628 A2 in such a way that the required operation electric current during parking is reduced.

The object is solved by a system in accordance with claim 1. Accordingly, a vehicle door unlock control system comprises one or a plurality of first lock/unlock control means for locking/unlocking a door based on communication with a portable unit; one or a plurality of second lock/unlock control means for locking/unlocking the door according to operation of a mechanical key or a door lock control switch; and unlock means setting means for setting means, by which the door can be unlocked, according to means, by which the door has been locked; said unlock means setting means changes the means, by which the door can be unlocked, according to the vehicle's parking elapsed time.

By configuring so, it is possible to change, according to an actual elapsed time of vehicle being parked, into means to unlock the door which requires a less operation electric current.

Further, the first lock/unlock control means may lock/unlock the door by means of a smart entry system or a wireless remote control system.

By configuring so, it is possible to set means to unlock the door according to means, by which the door has been locked, in a case where the door has been locked by means of the wireless remote control system or the smart entry system.

Further, the unlock means setting means may stop the function of the first lock/unlock control means according to an elapsed time during which the vehicle is parked.

By configuring so, it is possible to stop, according to an actual parking elapsed time, the function of the means to unlock, which requires a more operation electric current, to save the power consumption.

Further, the vehicle door unlock control system may further have vehicle electronic unit function setting means for limiting operation of a vehicle electric unit according to the means, by which the door has been locked.

By configuring so, it is possible to appropriately limit the operation of the vehicle electric unit after the door is locked, and thus, it is possible to both ensure the vehicle usability and reduce the power consumption.

According to an embodiment of the present invention, it is possible to achieve a vehicle door unlock control system by which means to unlock a door can be automatically changed according to means, by which the door has been locked.

### BRIEF DESCRIPTION OF DRAWINGS

Other objects and further features of the present invention will become more apparent from the following detailed description when read in conjunction with the accompanying drawings:
FIG. 1 shows a block diagram of a vehicle remote control system in one embodiment of the present invention;
FIG. 2 illustrates unlock means;
FIG. 3 illustrates function limitation during parking; and
FIG. 4 shows a flow chart of operation of the vehicle remote control system in the embodiment of the present invention.

### DETAILED DESCRIPTION OF THE PREFERRED EMBODIMENT

With reference to figures, a best mode for carrying out the present invention will be described based on a specific embodiment.

For parts/components having the same functions, the same reference numerals are given, and duplicate description is omitted, throughout all the figures.

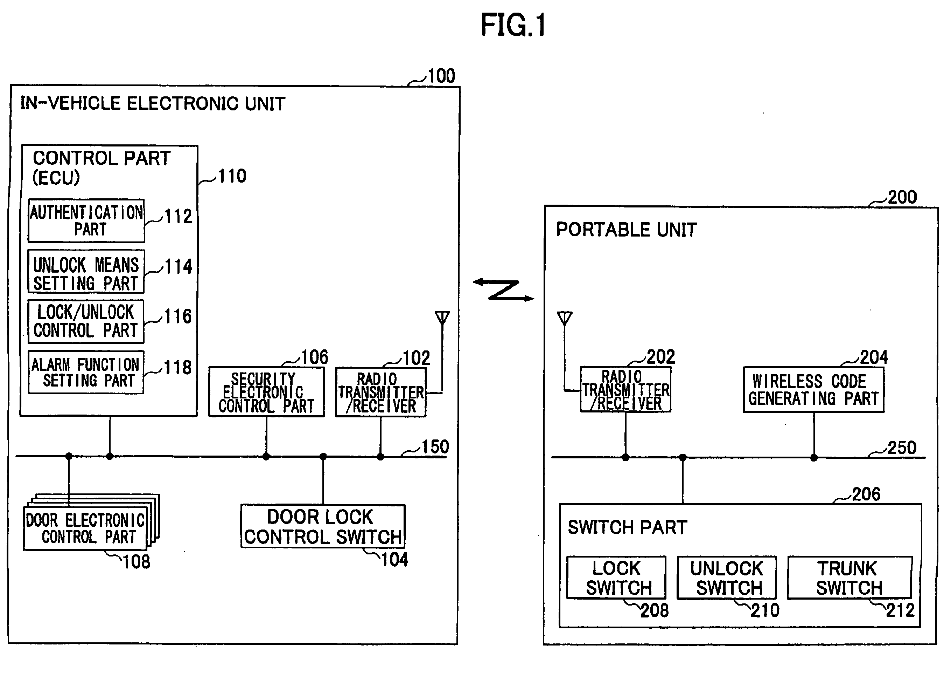

With reference to FIG. 1, a vehicle remote control system in an embodiment of the present invention will now be described.

As shown in FIG. 1, the vehicle remote control system includes an in-vehicle electronic unit 100 and a portable unit 200.

First, the in-vehicle electronic unit 100 will be described.

The in-vehicle electronic unit 100 includes, as shown, a radio transmitter/receiver 102 provided with an antenna, a door lock control switch 104 as second lock/unlock control means, a security electronic control part 106, a door electronic control part 108 and a control part 110 (ECU: Electronic Control Unit) acting as a vehicle door unlock control system, each mounted in a vehicle.

The control part 110 includes an authentication part 112, an unlock means setting part 114 acting as unlock means setting means, a lock/unlock control part 116 acting as first lock/unlock control means and an alarm function setting part 118 acting as vehicle electronic unit function setting means. The radio transmitter/receiver 102, the door lock control switch 104, the security electronic control part 106, the door electronic control part 108 and the control part 110 are connected together by means of a bus 150.

When a smart entry system operates, the radio transmitter/receiver 102 transmits a request signal according to an instruction from the authentication part 112 described later. As a result, a smart key detection area is created. For example, the radio transmitter/receiver 102 transmits the request signal periodically at a predetermined period (referred to as the intermittent operation period), for example, every 0.3 seconds, when the vehicle enters a parked state. Further, the radio transmitter/receiver 102 extends the period at which the request signal is thus transmitted according to the actual parking elapsed time (extension of the intermittent operation period). As a result, the total time for which the request signal is transmitted can be effectively shortened accordingly. Further, the radio transmitter/receiver 102 receives a key's ID code transmitted by the portable unit 200 as a response to the request signal, and inputs the same in the control part 110.

Further, the radio transmitter/receiver 102 receives a very small electronic radio wave transmitted by the portable unit 200 when a wireless remote control system operates, and inputs, in the control part 110, information indicating wireless code included in the very small radio wave, for example, an identification code and a function code. Further, the radio transmitter/receiver 102 extends a period of receiving the very small radio wave according to the parking elapsed time (extension of the intermittent operation period). As a result, the total time for which the very small radio weave is received can be effectively shortened.

The door lock control switch 104 is provided on a driver's sheet for example, and controls locking/unlocking of each sheet door, according to the door control switch being operated by the user.

For example, when a manually operating door lock control switch provided in the door lock control switch 104 is pressed to a lock side or an unlock side, an instruction for locking or unlocking all the doors in a ganged manner is automatically input in the door electronic control part 108 described later.

Further, for example, when a mechanical key is inserted in a key cylinder of a driver's sheet door, and is operated by the user, an instruction for locking or unlocking all the doors in a ganged manner is automatically input in the door electronic control part 108.

The security electronic control part 106 controls an alarm function according to means by which the doors have been locked during parking.

For example, according to means by which the doors have been locked, the security electronic control part 106 determines that the user exists in the vehicle or near the vehicle. Further, in a non-precaution state in which automatic alarm is cancelled and no precaution is taken, the security electronic control part 106 determines that the user prepares to leave the vehicle. In a precaution preparation state in which a setting of the automatic alarm is prepared, the security electronic control part 106 determines that the user has left the vehicle. In a precaution state in which the automatic alarm is actually set and precaution is taken for a vehicle theft, the security electronic control part 106 actually controls the alarm function.

The door electronic control part 108 is provided for each passenger door of the vehicle. When a signal indicating to lock or unlock the doors is input from the door lock control switch 104 or a lock/unlock control part 116, described later, the door electronic control part 108 locks or unlocks the doors according to the signal.

The authentication part 112 generates the request signal when the smart entry system operates. Further, the authentication part 112 carries out identification/comparison of the input ID code. Further, the authentication part 112 identifies the input identification code when the wireless remote control system operates. For example, the authentication part 112 determines whether or not the input identification code is coincident with identification information unique to the vehicle.

The unlock means setting part 114 changes, if necessary, means, by which the doors can be unlocked, according to means, by which the doors have been locked, and according to the vehicle's parking elapsed time (simply referred to as 'parking elapsed time').

For example, as the means to lock the doors, the following methods may be applied:
(1) A method in which, the manual operation door lock control switch provided in the door lock control switch 104 is turned to the locking side, and thus, all the doors are locked in the ganged manner, or, the locking is made by closing the door with the door outside handle being pulled (this method will be referred to as 'keyless lock', hereinafter).
(2) A method in which the mechanical key is inserted into the driver's sheet cylinder, and is operated, whereby all the doors are locked in the ganged manner (hereinafter, this method will be called as 'key ganged lock').
(3) A method in which, in the case where the wireless entry system operates, the lock switch 208 of the portable unit 200 is pressed, whereby all the doors are locked (hereinafter, this method will be is called as 'wireless lock').
(4) A method in which, in the case where the smart entry system operates, the user leaves the vehicle with the smart key in an outside-of-vehicle-room detection area, a lock switch of any sheet door outside handle is pressed when all the doors are closed, whereby all the doors are locked (hereinafter, this method will be called as 'smart lock').

The unlock means setting part 114 detects in which one of these four methods, i.e., the keyless lock, the key ganged lock, the wireless lock and the smart lock, the doors of the vehicle have been locked. Then, based on the means thus detected, by which the doors have been thus locked, the unlock means setting part 114 sets means, by which the thus-locked doors can be unlocked.

For example, the unlock means setting part 114 stops the operation of the smart entry system and the wireless remote entry system according to the parking elapsed time. In this case, as the method is easier (or more convenient) for the user, the temporal restriction is given more strictly. In contest thereto, as the method is more inconvenient (or troublesome) to the user, i.e., in the case of the above-mentioned key ganged lock for example, the temporal restriction is given less strictly. That is, as the parking elapsed time becomes longer, the function is restricted in an order, i.e., first, function restriction is applied to unlock operation by means of the smart entry system; then, to unlock operation by means of the wireless remote control system; and finally, to unlock operation by means of the mechanical key.

Thereby, it is possible to ensure the convenience for a short parking elapsed time, while, it is possible to reduce the battery consumption amount for a long parking elapsed time.

The unlock means setting part 114 selects a previously set operation electric current reduction mode, and sets means, by which the doors can be unlocked, according to the thus-selected operation electric current reduction mode.

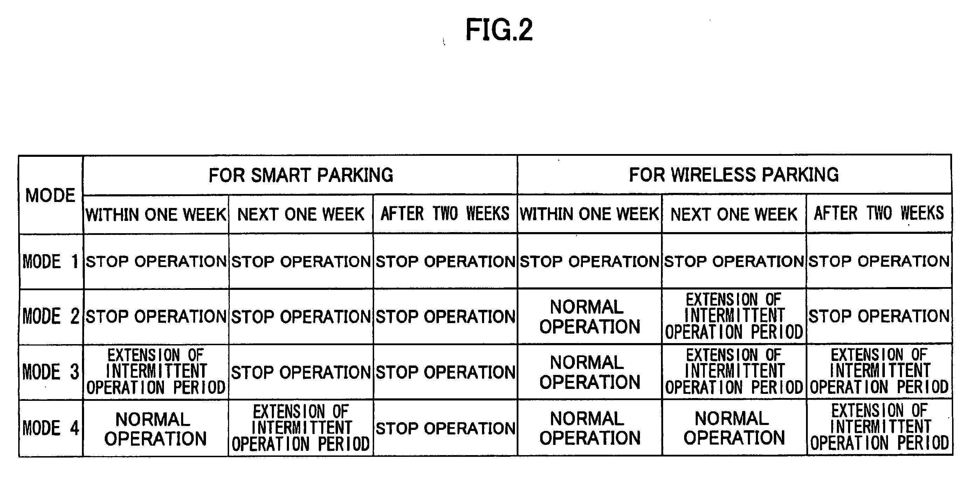

With reference to FIG. 2, the operation electric current reduction mode will now be described.

In the present embodiment, the smart entry system and the wireless remote control system, each of which requires large power consumption, are stopped in their operations according to a parking elapsed time.

A time at which the operations of the smart entry system and the wireless remote control system are actually stopped depends on particular means by which the doors have been locked.

When the doors of the vehicle have been locked by the above-mentioned keyless lock, the operations of the smart entry system and the wireless remote control system are stopped from the time at which the parking starts (this case is referred to as a mode 1, hereinafter).

In this case, from the time at which the parking starts, the doors can be unlocked only by a method (referred to as 'key ganged unlock', hereinafter) in which the mechanical key is inserted into the driver's sheet door key cylinder, is operated, and thus, all the doors are unlocked.

When the vehicle doors are locked by means of the above-mentioned key ganged lock, the operation of the smart entry system is stopped from the time at which the parking starts, while, the wireless remote control system. operates within one week (first one week) from the time at which the parking starts, the intermittent operation period is extended in the subsequent one week (second one week), and after that, the operation is stopped (this case will be referred to as a mode 2, hereinafter).

In this case, within one week from the time at which the parking starts, the doors can be unlocked by means of any one of the wireless remote control system and the above-mentioned key ganged unlock. In the subsequent one week, the doors can be unlocked by means of any one of, in addition to the key ganged unlock, the wireless remote control system only during the operation time of every intermittent operation period.

When the vehicle doors are locked by means of the above-mentioned wireless lock, the intermittent operation period of the smart entry system is extended during one week (first one week) from the time at which the parking starts. However, after that, operation of the smart entry system is stopped. The wireless remoter control system operates normally within one week (first one week) from the time at which the parking starts, and after that, the intermittent operation period is extended (this case will be referred to as a mode 3, hereinafter).

In this case, within one week from the time at which the parking starts, the doors can be unlocked by means of any one of, in addition to the wireless remote control system and the key ganged unlock, the smart entry system only during the operation time of every intermittent operation period. In the subsequent one week (second one week), the doors can be unlocked by means of any one of, in addition to the key ganged unlock, the wireless remote control system only during the operation time of every intermittent operation period. After that, the doors can be unlocked by means of any one of, in addition to the key ganged unlock, the wireless remote control system only during the operation time of every intermittent operation period.

When the doors are locked by means of the above-mentioned smart lock, the smart entry system operates normally during first one week from the time at which the parking starts. In the subsequent one week (second one week), the intermittent operation period of the smart entry system is extended. After that, the operation of the smart entry system is stopped. On the other hand, the wireless remoter control system operates normally within the first two weeks from the time at which the parking starts, and after that, the intermittent operation period is extended (this case will be referred to as a mode 4, hereinafter).

In this case, within the first one week from the time at which the parking starts, the doors can be unlocked by means of any one of the smart entry system, the wireless remote control system and the key ganged unlock. In the subsequent one week (second one week), the doors can be unlocked by means of any one of, in addition to the wireless remote control system and the key ganged unlock, the smart entry system only during the operation time of every intermittent operation period. After that, the doors can be unlocked by means of any one of, in addition to the key ganged unlock, the wireless remote control system only during the operation time of every intermittent operation period.

The lock/unlock control part 116 inputs, in the door electronic control part 108, the instruction to lock all the doors when detecting that the lock switch of any sheet door outside handle is pressed in the outside-of-vehicle-room detection area when the user carrying the smart key leaves the vehicle in the outside-of-vehicle-room detection area and all the doors are closed, in a case where the smart entry system operates. Further, the lock/unlock control part 116 unlocks all the doors when detecting that any sheet outside door handle is held (i.e., its rear surface is touched) by the user carrying the smart key in the outside-of-vehicle-room detection area in a case where the smart entry system operates.

Further, the lock/unlock control part 116 inputs, in the door electronic control part 108, the instruction to lock or unlock all the doors, according to an instruction for locking or unlock the doors, based on the very small radio wave (wireless signal) transmitted from the portable unit 200, in a case where the wireless remote control system operates.

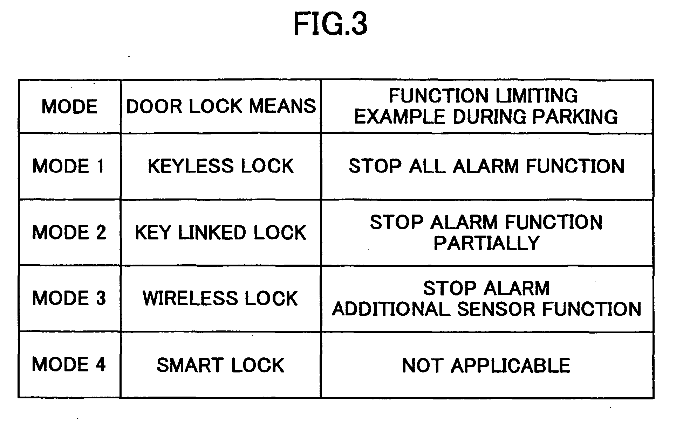

The alarm function setting part 118 sets an alarm function according to the means by which the vehicle doors are locked, as shown in FIG. 3.

For example, in the above-mentioned mode 1, the alarm function setting part 118 inhibits all the functions of the alarm function for precaution state. For example, the alarm function setting part 118 stops a function that, when an intruder in the vehicle room is detected, an alarm is given, or this matter is notified of to the user. Further, the alarm function setting part 118 stops a function that, when a fact that a glass is broken is detected, an alarm is given, or this matter is notified of to the user.

In the above-mentioned mode 2, the alarm function setting part 118 inhibits the alarm function for precaution state, partially. For example, the alarm function setting part 118 stops the function that, when an intruder in the vehicle room is detected, an alarm is given, is stopped. However, this matter that the intruder in the vehicle room is detected, is notified of to the user.

In the above-mentioned mode 3, the alarm function setting part 118 inhibits the alarm function for precaution state, partially. For example, the alarm function setting part 118 stops the function that, when a fact that a glass is broken is detected, an alarm is given. However, this matter that the fact that the glass is broken is detected, is notified of to the user.

In the above-mentioned mode 4, the alarm function setting part 118 does not inhibit the alarm function for precaution state.

Thus, the function during parking is appropriately inhibited (limited), and as a result, it is possible to positively reduce power consumption during parking, whereby the battery can be prevented being dead.

Next, the portable unit 200 will now be described.

The portable unit 200 includes, as shown in FIG. 1, a radio transmitter/receiver 202, a wireless code generating part 204 and a switch part 206. The switch part 206 includes a lock switch 208, a unlock switch 210 and a trunk switch 212. The radio transmitter/receiver 202, the wireless code generating part 204, the lock switch 208, the unlock switch 210 and the trunk switch 212 are together connected by means of a bus 250.

The radio transmitter/receiver 202 receives the request signal in a case where the smart entry system operates, and transmits the ID code in response thereto. Further, the radio transmitter/receiver 202 transmits, to the vehicle, the very small radio wave according to actual operation made on the switch part 206 by the user in a case where the wireless remote control system operates. This very small radio wave includes the wireless code, for example, the identification code and the function code.

The lock switch 208 is a switch which is pressed by the user for locking the vehicle doors in a case where the wireless remote control system operates.

The unlock switch 210 is a switch which is pressed by the user for unlocking the vehicle doors in a case where the wireless remote control system operates.

The trunk switch 212 is a switch which is pressed by the user for opening a trunk of the vehicle in a case where the wireless remote control system operates.

The wireless code generating part 204 generates the function code associated with each switch, according to operation made on the switch part 206 by the user, and inputs the same in the radio transmitter/receiver 202.

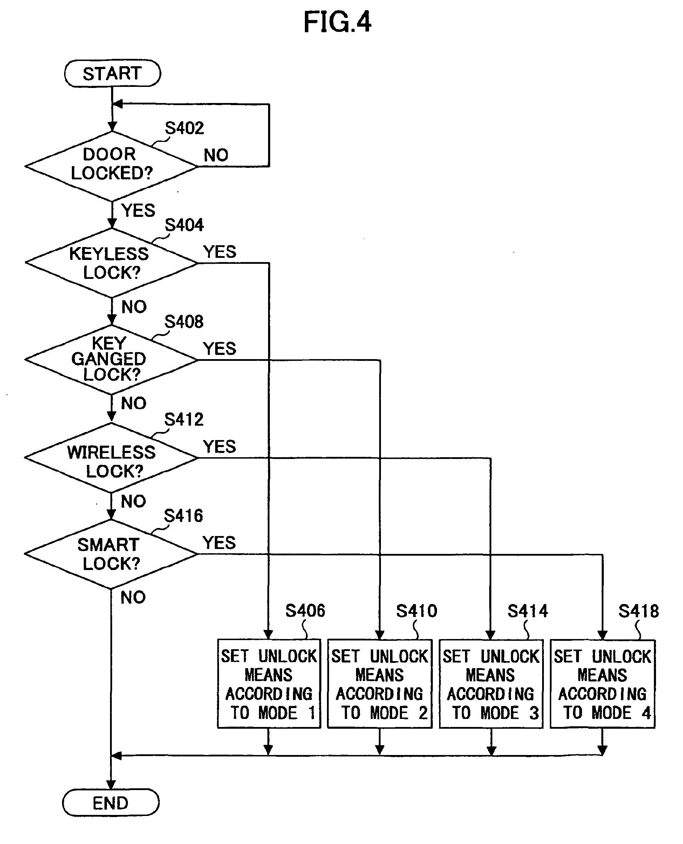

Next, operation of the vehicle remote control system in the present embodiment will now be described. Here, with reference to FIG. 4, mainly, operation or the control part 110 will be described.

The unlock means setting part 114 determines whether or not the doors have been locked (Step S402).

When the doors have not been locked (No of Step S402), Step S402 is retuned to. When the doors have been locked (Yes of Step S402), the unlock means setting part 114 determines whether or not the means by which the doors have been thus locked is the above-mentioned keyless lock (Step S404).

When the means by which the doors have been locked is the keyless lock (Yes of Step S404), the unlock means setting part 114 selects the mode 1 and sets the means by which the doors can be unlocked according to the mode 1 (Step S406). That is, the operations of the smart entry system and the wireless remote control system are stopped from the time at which the parking starts.

On the other hand, when the means by which the doors have been thus locked is not the keyless lock (No of Step S404), the unlock means setting part 114 determines whether or not the means by which the doors have been thus locked is the above-mentioned key ganged lock (Step S408).

When the means by which the doors have been locked is the key ganged lock (Yes of Step S408), the unlock means setting part 114 selects the mode 2 and sets the means by which the doors can be unlocked according to the mode 2 (Step S410). That is the operation of the smart entry system is stopped from the time at which the parking starts. On the other hand, the wireless remote control system normally operates within the first one week from the time at which the parking starts, the intermittent operation period is extended in the subsequent one week (second one week), and after that, the operation is stopped.

When the means by which the doors have been thus locked is not the key ganged lock (No of Step S408), the unlock means setting part 114 determines whether or not the means by which the doors have been thus locked is the above-mentioned wireless lock (Step S412).

When the means by which the doors have been locked is the wireless lock (Yes of Step S412), the unlock means setting part 114 selects the mode 3 and sets the means by which the doors can be unlocked according to the mode 3 (Step S414). That is, the intermittent operation period of the smart entry system is extended in the first one week from the time at which the parking starts, and after that, the operation is stopped. On the other hand, the wireless remote control system normally operates within the first one week from the time at which the parking starts, and after that, the intermittent operation period is extended.

When the means by which the doors have been thus locked is not the above-mentioned wireless lock (No of Step S412), the unlock means setting part 114 determines whether or not the means by which the doors have been thus locked is the above-mentioned smart lock (Step S416).

When the means by which the doors have been locked is the smart lock (Yes of Step S416), the unlock means setting part 114 selects the mode 4 and sets the means by which the doors can be unlocked according to the mode 4 (Step S418). That is, the smart entry system normally operates within the first one week from the time at which the parking starts, the intermittent operation period is extended in the subsequent one week (second one week), and after that, the operation is stopped. On the other hand, the wireless remote control system normally operates within the first two weeks from the time at which the parking starts, and after that, the intermittent operation period is extended.

When the means by which the doors have been thus locked is not the smart lock (No of Step S416), the processing is finished.

In the embodiment of the present invention described above, in the vehicle remote control system employing the system consuming the operation electric current during parking such as the smart entry system, it is determined which means, i.e., the keyless lock, the key ganged lock, the wireless lock or the smart lock, the doors have been locked by, and, based on the detection result, the means by which the doors can be unlocked is changed according to the parking elapsed time. Thereby, the power consumption can be effectively reduced.

Further, when the doors have been locked, each operation carried out after that is limited. Thereby, it is possible to further reduce the power consumption.

Further, it is possible to select the operation electronic current during parking. For example, when the vehicle is parked for a long period, the means by which the doors are locked should be selected such that the mode in which the operation electronic current is small is entered accordingly. By which the power consumption can be effectively reduced, and thus, the battery can be prevented from being dead.

The description has been made for the present embodiment for the case where the unit in which the time at which the smart entry system and the wireless remote control system are stopped in their operations is one week. However, this unit may be changed appropriately. Further, in the present embodiment, the case where the smart entry system and the wireless remote control system are employed has been described. However the present invention may be applied for a case where at least one system thereof is employed.

Further, for the present embodiment, the case where the alarm function is limited has been described as one example of the scheme to limit a function of the vehicle electronic unit. However, any other function(s) than the alarm function may be limited instead.

The vehicle door unlock control system according to the present invention may be applied to a vehicle smart entry system or wireless remote control system.

Further, the present invention is not limited to the above-described embodiment, and variations and modifications may be made without departing from the basic concept of the present invention claimed below.

## Claims

1. A vehicle door unlock control system comprising:
one or a plurality of first lock/unlock control means for locking/unlocking a door based on communication with a portable unit;
one or a plurality of second lock/unlock control means for locking/unlocking the door according to operation of a mechanical key or a door lock control switch; and
unlock means setting means for setting the means, by which the door can be unlocked, according to the means, by which the door has been locked, **characterized in that**
said unlock means setting means changes the means, by which the door can be unlocked, according to an elapsed time during which the vehicle is parked.

2. The vehicle door unlock control system as claimed in claim 1, wherein:
said one or a plurality of first lock/unlock control means locks/unlocks the door by means of a smart entry system or a wireless remote control system.

3. The vehicle door unlock control system as claimed in any one of claims 1 or 2, wherein:
said unlock means setting means stops the function of said one or a plurality of first lock/unlock control means according to an elapsed time during which the vehicle is parked.

4. The vehicle door unlock control system as claimed in any one of claims 1 through 3, further comprising:
vehicle electronic unit function setting means for limiting operation of a vehicle electric unit according to the means, by which the door has been locked.

## Patentansprüche

1. Ein Fahrzeugtürver- und -entriegelungssystem, aufweisend:
eines oder eine Mehrzahl erster Verriegelungs-/Entriegelungssteuermittel zum Verriegeln/Entriegeln einer Tür basierend auf einer Kommunikation mit einer tragbaren Einheit; eines oder eine Mehrzahl zweiter Verriegelungs-/Entriegelungssteuermittel zum Verriegeln/Entriegeln der Tür gemäß einer Betätigung eines mechanischen Schlüssels oder eines Türverriegelungssteuerschalters; und
Entriegelungsmittelsetzmittel zum Festsetzen derjenigen Mittel, durch welche die Tür entriegelt werden kann, gemäß denjenigen Mitteln, durch welche die Tür verriegelt wurde, **dadurch gekennzeichnet, dass**
die Entriegelungsmittelsetzmittel diejenigen Mittel, durch welche die Tür entriegelt werden kann, gemäß einer verstrichenen Zeit, während der das Fahrzeug geparkt ist, ändert.

2. Das Fahrzeugtürver- und -entriegelungssystem nach Anspruch 1, wobei:
das eine oder die Mehrzahl der ersten Verriegelungs-/Entriegelungssteuermittel die Tür mittels eines Smart-Entry-Systems oder eines drahtlosen Fernsteuersteuersystems verriegelt/entriegelt.

3. Das Fahrzeugtürver- und -entriegelungssystem nach einem der Ansprüche 1 oder 2, wobei:
die Entriegelungsmittelsetzmittel die Funktion des einen oder der Mehrzahl der ersten Verriegelungs-/Entriegelungssteuermittel gemäß einer verstrichenen Zeit, während der das Fahrzeug geparkt ist, stoppt.

4. Das Fahrzeugtürver- und -entriegelungssystem nach einem der Ansprüche 1 bis 3, weiterhin mit:
Setzmitteln für die Funktion einer elektronischen Fahrzeugeinheit zum Beschränken des Betriebs einer elektrischen Einheit des Fahrzeugs gemäß derjenigen Mittel, durch welche die Tür verriegelt wurde.

## Revendications

1. Système de commande de déverrouillage de porte de véhicule comprenant :
un ou plusieurs premiers moyens de commande de verrouillage/déverrouillage aptes à verrouiller/déverrouiller une porte en se basant sur une communication avec une unité portative ;
un ou plusieurs seconds moyens de commande de verrouillage/déverrouillage aptes à verrouiller/déverrouiller la porte en fonction de la mise en oeuvre d'une clé mécanique ou d'un interrupteur de commande de verrouillage de porte ; et
un moyen de paramétrage de moyens de déverrouillage apte à paramétrer les moyens à l'aide desquels la porte peut être déverrouillée, en fonction des moyens à l'aide desquels la porte a été verrouillée,
**caractérisé en ce que** le moyen de paramétrage de moyens de déverrouillage change les moyens à l'aide desquels la porte peut être déverrouillée en fonction du temps écoulé pendant lequel le véhicule est en stationnement.

2. Système de commande de déverrouillage de porte de véhicule selon la revendication 1, dans lequel lesdits un ou plusieurs premiers moyens de commande de verrouillage/déverrouillage verrouillent/déverrouillent la porte au moyen d'un système intelligent d'entrée ou d'un système de télécommande sans fil.

3. Système de commande de déverrouillage de porte de véhicule selon l'une quelconque des revendications 1 ou 2, dans lequel ledit moyen de paramétrage de moyens de déverrouillage arrête le fonctionnement desdits un ou plusieurs premiers moyens de commande de verrouillage/déverrouillage en fonction du temps écoulé pendant lequel le véhicule est en stationnement.

4. Système de commande de déverrouillage de porte de véhicule selon l'une quelconque des revendications 1 à 3, comprenant en outre un moyen de paramétrage de fonctionnement d'unité électronique de véhicule apte à limiter le fonctionnement d'une unité électrique de véhicule en fonction des moyens à l'aide desquels la porte a été verrouillée.
